# EUROPÄISCHE PATENTSCHRIFT

(11) **EP 3 204 296 B1**
(45) Veröffentlichungstag und Bekanntmachung des Hinweises auf die Patenterteilung: **04.12.2019**
(21) Anmeldenummer: 15784291.5
(22) Anmeldetag: 05.10.2015
(51) Int. Cl.: B64D 45/02, F16B 33/00, F16B 37/14

(54) **VERBINDUNGSMITTELSYSTEM, VERWENDUNG EINES VERSIEGELUNGSHILFSMITTELS SOWIE VERFAHREN ZUM VERSIEGELN EINES VERBINDUNGSMITTELS**
CONNECTING MEANS SYSTEM, USE OF A SEALING AID AND METHOD FOR SEALING CONNECTING MEANS
ENSEMBLE DE MOYEN DE RACCORDEMENT, UTILISATION D'UN MOYEN AUXILIAIRE DE SCELLEMENT ET PROCÉDÉ POUR SCELLER UN MOYEN DE RACCORDEMENT

(30) Priorität: 06.10.2014 DE 102014220202
(43) Veröffentlichungstag der Anmeldung: 16.08.2017
(73) Patentinhaber: Fraunhofer-Gesellschaft zur Förderung der angewandten Forschung e.V., 80686 München (DE)
(72) Erfinder: MOHR, Frank, 27576 Bremerhaven (DE)
(74) Vertreter: Pfenning, Meinig & Partner mbB
(86) Internationale Anmeldenummer: PCT/EP2015/072950
(87) Internationale Veröffentlichungsnummer: WO 2016/055415

(56) Entgegenhaltungen:
- EP-A2- 2 466 024
- GB-A- 2 025 557
- JP-A- H0 369 808
- JP-A- 2013 019 512
- US-A- 2 710 113
- US-A- 3 470 787

## Beschreibung

Gegenstand der vorliegenden Anmeldung ist ein Verbindungsmittelsystem nach Anspruch 1, eine Verwendung eines Versiegelungshilfsmittels nach Anspruch 8 sowie ein Verfahren nach Anspruch 10.

In einigen Bereichen, wie beispielsweise dem Flugzeugbau müssen Verbindungsmittel, wie beispielsweise Nieten oder Schrauben für einen Korrosionsschutz und für eine Funkenübertragung versiegelt werden. Dies ist insbesondere dann der Fall, wenn die Niet- oder Schraubenköpfe mit Treibstoff in Kontakt kommen könnten.

Im Stand der Technik sind verschiedene Techniken bekannt, um die Niet- und Schraubenköpfe zu versiegeln. Hierbei ist eine vollständige Benetzung des Niet- und Schraubenkopfes oder der Erhebung, wie beispielsweise einer Schweißnaht mit der Versiegelungsmasse gewünscht. Bei manuellem Klebstoffauftrag wird dieser von Hand mit Pinseln oder aus Kartuschen auf den Niet- oder Schraubenkopf aufgebracht. Eine weitere Technik sieht vor, eine Kappe aus PVC oder ähnlichem Thermoplast mit einem Versiegelungsklebstoff zu befüllen und die Kappe mit dem ungehärteten Polymer über dem Niet- und Schraubkopf aufzusetzen. Der überschüssige Klebstoff wird am Kappenrand abgestreift. Nach Aushärtung der Versiegelung wird die Kappe dann abgehebelt. Diese Technik hat unter anderem den Nachteil, dass die Kappen nach Aushärtung der Versiegelungsmasse wieder entfernt werden müssen, damit sie im Betrieb nicht von selbst abfallen und dann, beispielsweise im Flugzeugtank herumschwimmen. Dies bedeutet, dass alle Niet- und Schraubenköpfe zweimal durch den Versiegelungsfachmann bedient werden, d.h. zum Auflegen der Kappe und zum Entfernen der Kappe. Ein vorzeitiges Abziehen der Kappe hat den Nachteil, dass ein großer Teil des Klebstoffs durch Adhäsion an der Kappe in selbiger verbleibt und die Versiegelungsgeometrie zerstört wird. Ein ähnliches Problem tritt auf, wenn man den Versiegelungswerkstoff mit Hilfe einer Glockendüse aufträgt. Hier hat die Düse die Form einer Glocke, die vor der Applikation über das zu versiegelnde Bauteil gestülpt wird und dann der Versiegelungsklebstoff in den entstehenden Hohlraum gepresst wird. Beim Abnehmen der Glockendüse wird viel Versiegelungsklebstoff vom Nietkopf wieder entfernt. Eine weitere Möglichkeit ist es, eine Kappe aus demselben Werkstoff, der nachher auch für die Versiegelung benutzt wird, zu verwenden. Die vorher ausgehärtete Kappe verbindet sich mit dem flüssigen Polymerklebstoff, der in diesem Verfahren ebenfalls vor dem Überstülpen über den Niet- und Schraubenkopf teilautomatisiert oder von Hand in die Kappe eingespritzt wird. Die Aushärtung der flüssigen Polymermischung verbindet sich auf der einen Seite mit dem Niet- und Schraubenkopf, und auf der anderen Seite mit dem Kappenpolymer gleicher chemischer Zusammensetzung. Bei dieser Variante muss darauf geachtet werden, dass die Kappen selbst zu 100% auf Fehler geprüft und auch von innen oberflächenvorbehandelt werden müssen. Dies erhöht die Kosten und ist sehr zeitaufwändig.

Das Dokument JP H03 69808 A offenbart eine Methode zum Korrosionsschutz für Bolzen und Mutter und eine Schutzkappe. Damit Bolzen und Muttern nicht verbrennen können, um die Arbeitseffizienz zu erhöhen, und um ein Herabfallen zu verhindern, wird ein vorspringender Bolzen- und Mutterabschnitt mit einer Schutzkappe aus Glasfaser umwickelt, wobei die Schutzkappe innen mit Korrosionsschutzmittel gefüllt und auf der Oberfläche mit einem schuppenförmigen Glimmerfilm versehen ist. Die Netzstruktur der Schutzkappe und deren Inneres sind sichtbar.

Aufgabe der vorliegenden Erfindung ist es, eine Alternative zu den bekannten Techniken zur Versiegelung von Verbindungsmitteln wie Nieten, Schrauben oder Schweißnähten zur Verfügung zu stellen.

Die Aufgabe wird gelöst mit einem Verbindungsmittelsystem nach Anspruch 1, einer Verwendung eines Versiegelungshilfsmittels nach Anspruch 8 sowie einem Verfahren nach Anspruch 10. Weitere Ausführungsformen können den untergeordneten Ansprüchen entnommen werden.

Das Versiegelungshilfsmittel ist ein Hilfsmittel zur Bereitstellung einer Versiegelung eines Verbindungsmittels, wie z.B. einem Niet oder einer Schraube, insbesondere einem der Enden des Niets oder der Schraube, wie dem Nietkopf oder dem Schraubenkopf. Das Versiegelungshilfsmittel umfasst eine Form mit einer Vielzahl von Löchern und einer Öffnung, so dass die Form mit der Öffnung über das Ende des Verbindungsmittels stülpbar ist. Die Form ist in einer Ausführungsform bereits vor dem Überstülpen mit einer flüssigen oder pastösen Versiegelungsmasse befüllt. In einer anderen Ausführungsform wird die Form zuerst auf dem Verbindungsmittel angeordnet und erst anschließend durch eines der Vielzahl der Löcher befüllt. Die Form des Versiegelungshilfsmittels ist durch eine Wandung und eine in die Wandung eingelassene große Öffnung zum Befüllen des Versiegelungshilfsmittel mit der Versiegelungsmasse und zum Aufstülpen der Form auf das Ende eines Verbindungsmittels ausgestattet.

Die Form ist dabei im Wesentlichen formstabil, d.h. bis zu einem vorgegebenen Druck nicht verformbar. Die Form kann beispielsweise im Rahmen eines Spritzgussverfahrens hergestellt werden und kann in verschiedenen Ausführungsformen die Geometrie eines Fingerhuts, eines Korbs oder einer Schüssel oder ähnlichem besitzen. Diesen Formen ist gemein, dass sie neben der formgebenden Wandung eine große Öffnung umfassen. In einer Ausführungsform ist die Öffnung in einer Schnittebene der Form angeordnet, in der die Form einen größten Umfang aufweist. Die Form umfasst neben der großen Öffnung zum Aufstülpen auf das Verbindungsmittel eine Vielzahl von Löchern in der Formwand. Die Größen der Löcher sind derart gewählt, dass die pastöse bzw. flüssige Versiegelungsmasse durch die Löcher austreten kann. Die Viskosität der flüssigen oder pastösen Versiegelungsmasse ist dabei derart gewählt, dass diese vorzugsweise unter normalem atmosphärischem Druck von 1 bar nicht aus den Löchern austritt, sondern in der Form gehalten wird. Wird jedoch beispielsweise von der Öffnungsseite her Druck auf die Versiegelungsmasse ausgeübt, so dass diese in Richtung der Innenseite der Form gepresst wird, tritt die Versiegelungsmasse durch die Löcher der Formwand hindurch und fließt auch über die zwischen zwei benachbarten Löchern vorhandenen Trennstege der Formwand. Auf diese Weise bildet bei einem Verbindungsmittelsystem mit einer Versiegelung eines Endes des Verbindungsmittelsystems das Versiegelungshilfsmittel bzw. die Form des Versiegelungshilfsmittels ein Inlay bzw. ein Skelett bzw. eine Bewehrung, an dessen Außenseite sich die Versiegelungsmasse aufgrund der gewählten Viskosität verteilt, d.h. die aus dem Innenraum der Form verdrängte Versiegelungsmasse fließt an der Aussenseite der Form ab und bildet eine vollflächige Versiegelung der Form, welche nunmehr als Inlay, Skelett oder Bewehrung in die Versiegelungsmasse eingebettet ist.

Die Größe der jeweiligen Löcher kann dabei verschieden gewählt sein. Die Lochgröße, die Breite der Trennstege zwischen den Löchern und die Viskosität der Versiegelungsmasse bzw. die Versiegelungsmasse selbst werden dabei derart aufeinander abgestimmt, dass die Versiegelungsmasse in der Innenseite der Form gehalten wird, ohne durch die Löcher auszutreten sofern kein Druck auf die Versiegelungsmasse ausgeübt wird. Bei einem auf die Versiegelungsmasse aufgebrachten Druck tritt diese durch die Löcher aus und zerfließt auch über die Trennstege zwischen benachbarten Löchern hinweg, beispielsweise aufgrund einer aktiven oder druckbedingten Erwärmung der Versiegelungsmasse, einer Gravitation oder der Kohäsionskräfte der Versiegelungsmasse. Auf diese Weise ergibt sich eine vollflächige Bedeckung der Außenseite der Form durch eine die ausgehärteten Versiegelungsmasse umfassenden Versiegelung. Auf diese Weise ergibt sich eine vollflächige Bedeckung der auf ein Verbindungsmittel aufgebrachten Form durch die auszuhärtende oder ausgehärtete Versiegelungsmasse.

Das Versiegelungshilfsmittel bildet somit das Skelett entlang dessen sich die Versiegelungsmasse ergießen kann. Anders als bei der Applikation von Versiegelungsmasse über das Ende eines Verbindungsmittels ohne ein derartiges Skelett, definiert das Versiegelungsmittel die Form der Versiegelung ohne an einer Außenfläche der fertiggestellten und ausgehärteten Versiegelung eines Endes eines Verbindungsmittelsystems offen zu liegen. Die Form ist somit vollständig in die Versiegelungsmasse eingebettet, so dass das mit einer Versiegelung versehene Verbindungsmittelsystem in manchen Ausführungen keiner nachträglichen Bearbeitung bedarf.

Weitere Ausführungsformen ergeben sich aus den untergeordneten Ansprüchen.

Die Form umfasst ein Netz oder eine netzartige Form. Hierbei wird unter einem Netz verstanden, dass die Maschengröße, d.h. die Lochgröße der einzelnen Löcher größer ist als die Fläche der Trennstege zwischen zwei benachbarten Löchern. Mithilfe eines Netzes als Form ist es möglich, auch hochviskose Versiegelungsmassen für eine Versiegelung einzusetzen. Zudem wird das für die Form benötigte Material auf ein geringes Maß reduziert, was die Herstellbarkeit und die Kosten eines einzelnen Versiegelungshilfsmittels reduziert.

Je nach Ausführungsform des Versiegelungshilfsmittels kann die Vielzahl von Löchern bzw. Vielzahl von Maschen eine unterschiedliche Größe umfassen. Dies wird in den Figuren näher erläutert.

In einer weiteren Ausführungsform besitzt die Form eine Glocken- bzw. Kappenform, d.h. die Form erstreckt sich von einem größten Umfang im Bereich der Öffnung in vertikaler Richtung nach oben zu einem geringeren Umfang hin. Auf diese Weise kann der Nietkopf auf einer Innenseite der Form aufgenommen werden und verdrängt beim Aufsetzen des Versiegelungshilfsmittel auf beispielsweise den Nietkopf die Versiegelungsmasse, welche anschließend durch die Vielzahl von Löchern austreten kann.

In einer weiteren Ausführungsform wird die Form aus einem Kunststoff, vorzugsweise einem thermoplastischen Kunststoff oder einem Naturstoff, wie beispielsweise verdichtete Naturfasern oder Stärke oder Hartweizengrieß hergestellt. Dabei kann die Form beispielsweise im Rahmen eines Spritzgussverfahrens im Falle von Kunststoffen oder eines Pressverfahrens im Falle von Naturstoffen hergestellt werden. Die Größe der Form, bzw. des Netzes beträgt je nach Größe des Verbindungsmittels beispielsweise zwischen 6mm und 40mm Durchmesser an der Öffnungsseite und ebenso als Höhenmaß. Der Durchmesser der Trennstege beträgt beispielsweise je nach Form- bzw. Netzgröße zwischen 0,4 und 1,5 mm. Diese Maße sind lediglich exemplarisch und werden an die jeweilige Größe des Verbindungsmittels adaptiert.

In einer weiteren Ausführungsform ist der Durchmesser der Öffnung der Form des Versiegelungshilfsmittels derart gewählt, dass dieser mehr als 5% größer als ein Durchmesser des Endes des Verbindungselements ist, besonders vorzugsweise 10% größer als ein Durchmesser des Verbindungselements, besonders vorzugsweise 20% größer als ein Durchmesser des Verbindungselements gewählt ist. Hierdurch wird sichergestellt, dass das Ende des Verbindungsmittels vollständig in die Form aufgenommen werden kann und somit eine vollflächige Versiegelung hergestellt werden kann.

In einer weiteren Ausführungsform sind auf der Innenseite der Form Abstandshalter angeordnet, welche beispielsweise ein Auffädeln der Form auf das Ende des Verbindungsmittels erleichtern. Dabei können beispielsweise drei oder mehr Abstandshalter auf der Innenseite der Form angeordnet sein, welche eine konzentrische Anordnung der Form auf dem Verbindungsmittel ermöglichen. Die Abstandshalter können beispielsweise als in die Innenseite der Form ragende Stege ausgebildet sein.

In einer weiteren Ausführungsform besitzt die Form eine rotationssymmetrische Geometrie.

Obgleich bislang als Verbindungsmittel lediglich eine Schraube oder ein Niet erwähnt wurden, können mit einem Versiegelungshilfsmittel gemäß dieser Anmeldung auch beispielsweise Schweißnähte versiegelt werden. Hierbei ist die Form beispielsweise länglich im Schweißnahtverlauf folgend ausgebildet.

Als flüssige bzw. pastöse Versiegelungsmasse kommen beispielsweise Versiegelungsklebstoffe, wie ein flüssiger Polymerklebstoff in Frage, welche beispielsweise chemisch oder thermisch aushärtbar sind. Beispiele derartiger Versiegelungsmassen sind jeweils Ein- oder Zweikomponentige Epoxidharze, Polysulfide oder Polyurethane.

Die Form kann in einem ersten Verfahren zuerst mit einer flüssigen oder pastösen Versiegelungsmasse befüllt werden. Anschließend wird das so gebildete Versiegelungshilfsmittel auf einem Verbindungsmittel angeordnet, dass die Versiegelungsmasse durch die Löcher der Form von der Innenseite der Form auf die Außenseite der Form gepresst wird. Anschließend zerfließt die Versiegelungsmasse an der Außenseite der Form und es wird eine Versiegelung gebildet, innerhalb welcher die Form vollständig eingebettet ist. In einer Alternative wird die Form zunächst auf dem Verbindungmittel angeordnet und diese anschlie-βend mit beispielsweise einer Glockendüse befüllt. Im Gegensatz zu einer Versiegelungsverfahren ohne die als Skelett, Inlay oder Bewehrung dienende Form verbleibt ein Großteil der eingespritzten Versiegelungsmasse in der Form und an der Außenseite der Form kleben und wird beim Abheben der Glockendüse nicht mitgezogen. Vielmehr dient die Form als Skelett, welches der Versiegelung auch eine vordefinierte Kontur verleiht.

In einer weiteren Ausführungsform werden die Viskosität der Versiegelungsmasse und die Größe der Löcher der Form derart gewählt, dass die Kohäsionskrafte der durch die Löcher der Form (bzw. der Maschen des Netzes) derart eingestellt sind, dass vereinzelte durch die Löcher der Form austretenden Versiegelungsmassenstränge auf der Außenseite der Form zusammenfließen, so dass miteinander verbundene, benachbarte Versiegelungsmassestränge sich zu einem geschlossenen Volumen verbinden und das Volumen die Form vollständig einbettet. Hierfür ist es vorteilhaft, wenn alle Versiegelungsmassestränge mit jeweils benachbarten Versiegelungsmasssestränge zusammenfließen.

In einigen Varianten des Verfahrens ist vorgesehen, die Versiegelungsmasse vor dem Anordnen der Form auf dem Versiegelungsmittel erwärmt wird, um die Viskosität der Versiegelungsmasse herabzusetzen. Hierdurch wird das Zusammenfließen der einzelnen Stränge begünstigt. Dabei kann beispielsweise bei der Verwendung eines Polysulfids als Versiegelungsmasse eine Viskosität von 30-300 [Pa·S] bei 50° und 1 bar Atmosphäre aufweisen. Für eine Vielzahl von Lochgrößen der Löcher der Form wird ein Zerfließen der Versiegelungsmasse an der Außenseite der Form hierdurch oder durch Erwärmung der Versiegelungsmasse gewährleistet.

Nachfolgend werden verschiedene Ausführungsbeispiele einer Form, eines Versiegelungshilfsmittels, als auch eines Verbindungsmittelsystems anhand von Figuren erläutert. Es zeigen:
- Fign. 1A bis 1C: Ausführungsform einer Form für ein Versiegelungshilfsmittel bzw. ein Verbindungsmittelsystem;
- Fign. 2A bis 2C: weitere Ausführungsformen einer Form;
- Fig. 3: Illustration eines Versiegelungshilfsmittels;
- Fig. 4: Illustration eines auf einem Nietkopf angeordneten Versiegelungshilfsmittels;
- Fign. 5A bis 5C: Illustration der Applikation von Druck auf das Versiegelungshilfsmittel zum Fügen bzw. Überstülpen mit dem bzw. auf den Nietkopf;
- Fig. 6: Verbindungsmittelsystem; und
- Fig. 7: Schnitt durch das Verbindungsmittelsystem.

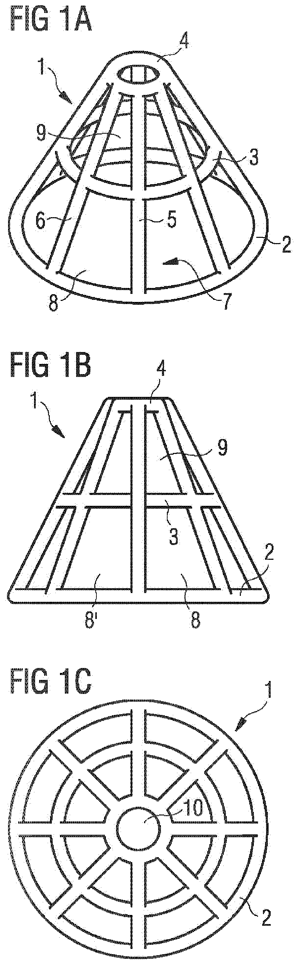

In der Fig. 1A ist eine Form, welche für ein Versiegelungshilfsmittel verwendet werden kann, dargestellt. Die netzartige Form 1 umfasst einen umlaufenden Steg 2 mit einem ersten Durchmesser, einen umlaufenden Steg 3 mit einem zweiten Durchmesser und einen umlaufenden Steg 4 mit einem dritten Durchmesser. Dabei ist der erste Durchmesser größer als der zweite Durchmesser, welcher wiederum größer als der dritte Durchmesser ist. Die umlaufenden Stege werden mit Längsstegen 5 und 6 miteinander verbunden. Die Stege bestehen beispielsweise aus einem thermoplastischen Polymer, wie Polypropylen. Die Längsstege 5 und 6 bzw. die umlaufenden Stege 2, 3 und 4 sind dabei derart voneinander beabstandet, dass zwischen den verschiedenen Stegen Löcher bzw. Maschen 8 und 9 definiert werden. Der umlaufende Steg 2 definiert eine Öffnung 7, durch welche beispielsweise eine Versiegelungsmasse durch die Öffnung auf die Innenseite der Form 1 eingebracht werden kann. Dabei ist die Viskosität der Versiegelungsmasse, beispielsweise eines Polymerklebstoffs derart gewählt, dass dieser durch die Öffnung 7 eingebracht werden kann, jedoch unter normalem atmosphärischen Druck von 1 bar nicht durch die Maschen bzw. Löcher 8 oder 9 fließt.

Die Form 1 kann beispielsweise mittels eines Spritzgussverfahrens hergestellt werden. Die Größe der Form 1 ist derart gewählt, dass diese über einen zu versiegelnden Nietkopf oder Schraubenkopf oder ein anderes Verbindungsmittel gestülpt werden kann. Dies bedeutet insbesondere, dass die Höhe zwischen den umlaufenden Stegen 2 und 4 derart gewählt ist, dass der Nietkopf vollständig innerhalb dieser Höhe liegt, und dass der Durchmesser des umlaufenden Stegs 2, 3 und 4 derart gewählt ist, dass dieser ebenfalls einen Durchmesser eines Nietkopfs aufnehmen kann.

In der Fig. 1B ist eine Seitenansicht der Form 1 dargestellt. Hier ist erkennbar, dass die Löcher 8 und 8', welche zwischen den umlaufenden Stegen 2 und 3 und entsprechenden Längsstegen 5 und 6 verlaufen, gleich groß sind. Zwischen den umlaufenden Stegen 3 und 4 befindet sich ein Loch 9, welches kleiner ist als die Löcher 8 bzw. 8'. Wie in der Fig. 1C erkennbar ist, definiert der umlaufende Steg 4 ein Loch 10, welches wiederum kleiner ist als die Löcher 8 bzw. 8' oder 9. Das Loch 10 kann beispielsweise zur nachträglichen Befüllung der Form mittels einer Glockendüse verwendet werden.

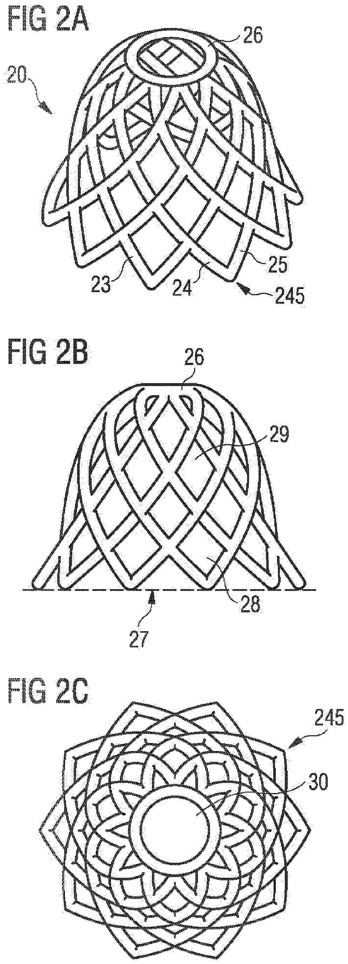

Ein weiteres Ausführungsbeispiel einer Form ist in den Fign. 2 dargestellt. Die in der Fig. 2A dargestellte Form 20 umfasst eine Vielzahl von Streben 23, 24 und 25, welche spiralförmig angeordnet sind und in einen umlaufenden Steg 26 münden. Die Streben 24 und 25 haben dabei eine unterschiedliche Spiralrichtung und sind derart angeordnet, dass deren dem umlaufenden Steg 26 abgewandten Enden an einem Punkt 245 zusammenlaufen. Die verschiedenen zum Punkt 245 korrespondierenden Endpunkte liegen in einer Ebene, wie sie beispielsweise in der Fig. 2B erkennbar ist. Diese Ebene definiert eine Öffnung 27, welche zum Einfüllen einer Versiegelungsmasse in die Form 20 geeignet ist. Zwischen den einzelnen Streben 23, 24 bzw. 25 werden Löcher 28 bzw. 29 definiert. Die Löcher sind dabei rautenförmig und werden von der Ebene der Öffnung 27 zum umlaufenden Steg 26 hin kleiner. Der umlaufende Steg 26 selbst umschließt ein Loch 30, welches die Form 20 zu seinem oberen Ende hin abschließt. Das Loch 30 ist dabei in der Darstellung der Fig. 2C deutlich erkennbar.

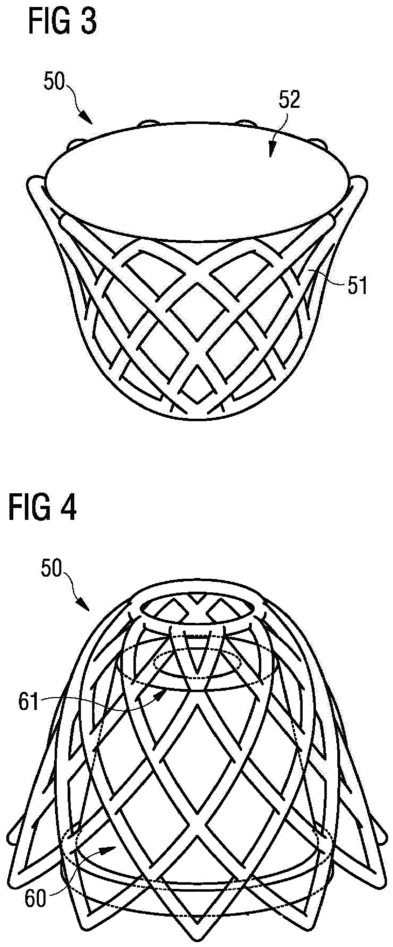

In der Fig. 3 ist ein Versiegelungshilfsmittel 50 dargestellt, welches eine Form 51 und eine Versiegelungsmasse 52 umfasst. Die Form 51 entspricht dabei der Form 20 der Fign. 2. In der Fig. 3( von unten nach oben betrachtet) ist deutlich erkennbar, dass die Außenhülle der Form 51 glockenförmig ist. Als Versiegelungsmasse ist beispielsweise 2K-Polysulfid vorgesehen, welches bei normalem atmosphärischen Druck und 20 °C eine Viskosität von ca. 500 [Pa·s] aufweist. Eine weitere Versiegelungsmasse kann ein 2K-Epoxidharz mit einer Viskosität von ca. 160 [Pa·s] sein. Die Löcher der Form 51 sind derart gewählt, dass die Versiegelungsmasse bei normalem Druck nicht aus den Löchern entweichen kann.

In der Fig. 4 ist die Form 51 auf einem Nietkopf 60, welcher versiegelt werden soll, dargestellt. Es ist erkennbar, dass der Durchmesser der Öffnung der Form 51 größer ist als der untere Durchmesser des Nietkopfs 60. Hierdurch wird bewirkt, dass das Versiegelungshilfsmittel den Nietkopf 60 vom unteren bis zum oberen Rand vollständig umschließen kann. Da der Nietkopf 60 selbst eine glockenähnliche Form umfasst, wurde hier die Form 51 ebenfalls in Glockenform gewählt. In anderen Varianten eines Verbindungsmittels, wie beispielsweise einer Schraube, kann jedoch auch die Kappen- oder Kegelstumpfgeometrie der Fig. 1 sinnvoller sein. Andere Geometrien werden in Abhängigkeit der Geometrie des zu versiegelnden Verbindungsmittels gewählt.

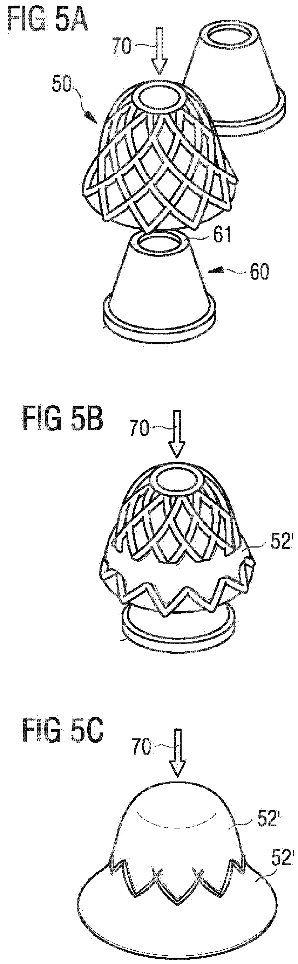

Anhand der Fign. 5 soll erläutert werden, wie die Versiegelungsmasse, welche innerhalb der Form 51 angeordnet ist, durch applizierten Druck von der Innenseite der Form verdrängt und durch die Löcher der Form nach außen tritt. Das Versiegelungshilfsmittel 50 wird mit der Öffnung 27 auf das obere Ende 61 des Nietkopfs mit einem Druck 70 aufgedrückt (Fig. 5A). Der Nietkopf verdrängt dabei die Versiegelungsmasse 52, welche durch die Löcher der Form 51 entweichen kann. In der Fig. 5B ist die verdrängte, aus der Innenseite der Form 51 herausgepresste Versiegelungsmasse 52' erkennbar. Die Versiegelungsmasse ist dabei beispielsweise derart gewählt, dass der zunehmende Druck oder eine aktive Erwärmung eine Verringerung der Viskosität bewirkt, so dass die durch die einzelnen Löcher tretende Versiegelungsmasse nach dem Austritt aus den Löchern auch die umlaufenden Stege bzw. Streben umschließt. Bei fortwährender Abwärtsbewegung der Versiegelungsmasse kommt es zu einer geschlossenen Oberfläche einer Versiegelung. Wird fortlaufend Druck appliziert, wird die Form 51 weiter auf den Niet gedrückt (so dass die Ebene der Öffnung 27 das untere Ende des Niets abschließt) und die Versiegelungsmasse dringt auch durch die oberhalb der verdrängten Versiegelungsmasse 52' liegenden Löcher (Fig. 5C).

In der gezeigten Ausführungsform ist das Loch 30 größer gewählt als die benachbarten, und durch die Streben 23 bis 25 definierten Löcher. Dies ist in verschiedenen Ausführungsformen hilfreich, da die Versiegelungsmasse (abhängig von der gewählten Viskosität) in dem oberen Bereich nicht mit Hilfe der Gravitation abfließen kann. Von daher ist es hilfreich, wenn das oberste Loch größer ist als die benachbarten unterhalb liegenden Löcher.

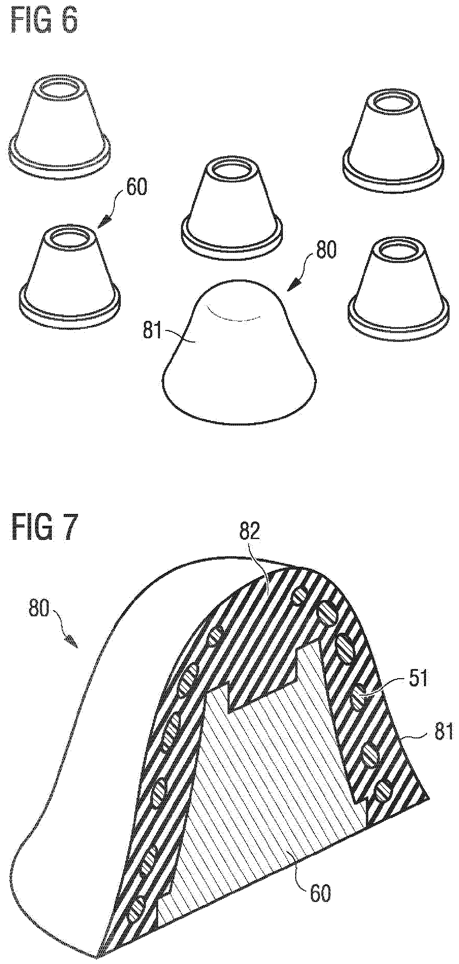

In der Fig. 6 ist das Endprodukt eines versiegelten Endes eines Verbindungsmittels dargestellt. Der versiegelte Niet 80 weist eine Oberfläche 81 auf, welche geschlossen und vorzugsweise glatt ausgebildet ist. Anhand der Fig. 7, welche einen Längsschnitt durch den versiegelten Niet 80 bildet, ist erkennbar, dass die Form 51 nunmehr vollständig innerhalb der Oberfläche 81 der Versiegelung 82 liegt. Der Niet 60 ist durch die Versiegelung 82 vollständig versiegelt und somit vor Korrosion oder Funkenbildung geschützt.

Weitere Ausführungsformen innerhalb des durch die unabhängigen Ansprüche definierten Schutzumfangs ergeben sich für den Fachmann in naheliegender Weise.

## Patentansprüche

1. Verbindungsmittelsystem (80) zum Versehen eines Endes eines Verbindungsmittels (60) mit einer Versiegelung, umfassend eine Versiegelung (82), welche eine ausgehärtete Versiegelungsmasse und eine in die Versiegelungsmasse eingebettete Form (51) aufweist, wobei die Form ein Netz umfasst und die Form eine Vielzahl von Löchern (8, 8', 9; 28, 29) und eine Öffnung (7; 27) besitzt und die Form mit der Öffnung der Form über das Ende eines Verbindungsmittels (60) stülpbar ist und ein umlaufender Steg (4, 26) ein weiteres Loch umschließt (10, 30), welches die Form zum oberen Ende hin abschließt, **dadurch gekennzeichnet, dass** die Form vollständig in die Versiegelungsmasse eingebettet ist.

2. Verbindungsmittelsystem nach Anspruch 1, wobei das versiegelte Ende des Verbindungsmittels ein Nietkopf, ein Schraubenkopf oder eine Schweißnaht ist.

3. Verbindungsmittelsystem nach einem der vorhergehenden Ansprüche, wobei die Form eine Glocken- oder Kappenform besitzt.

4. Verbindungsmittelsystem nach einem der vorhergehenden Ansprüche, wobei die Form aus einem Kunststoff, vorzugsweise einem thermoplastischen Kunststoff, oder einem Naturstoff, vorzugsweise aus Stärke oder Naturfasern, hergestellt ist.

5. Verbindungsmittelsystem nach einem der vorhergehenden Ansprüche, wobei die Form eine Lochgröße besitzt, welche derart gewählt ist, dass die unausgehärtete Versiegelungsmasse unter normalem Druck in der Form verbleibt.

6. Verbindungsmittelsystem nach einem der vorhergehenden Ansprüche, wobei auf einer Innenseite der Form Abstandshalter angeordnet sind.

7. Verbindungsmittelsystem nach einem der vorhergehenden Ansprüche, wobei die Form eine rotationssymmetrische Form besitzt.

8. Verwendung eines Versiegelungshilfsmittels zur Versiegelung eines Verbindungsmittels, wobei das Versiegelungshilfsmittel (50) eine Form (1; 20; 51) mit einer Vielzahl von Löchern (8, 8', 9; 28, 29) und einer Öffnung (7; 27) aufweist, wobei die Form ein Netz umfasst sowie einen umlaufenden Steg aufweist, welcher ein weiteres, die Form nach ihrem oberen Ende hin abschließendes Loch umschließt, so dass die Form mit der Öffnung der Form über das Ende eines Verbindungsmittels (60) stülpbar ist und die Form mit einer flüssigen oder pastösen Versiegelungsmasse (52) befüllt ist, wobei das Versiegelungshilfsmittel mit seiner Öffnung auf das Verbindungsmittel aufgestülpt wird, **dadurch gekennzeichnet, dass** durch die Löcher der Form heraustretende Versiegelungsmasse eine die Form vollständig einbettende Versiegelung bildet.

9. Verwendung nach Anspruch 8, wobei die Form nach dem Aufstülpen auf das Verbindungsmittel und einem Aushärten der Versiegelungsmasse vollständig in die Versiegelung eingebettet ist.

10. Verfahren zum Versiegeln eines Verbindungsmittels (60), wobei eine Form (1; 20; 51) mit einer Vielzahl von Löchern (8, 8', 9; 28, 29) und einer Öffnung (7; 27) mit einer Versiegelungsmasse (52) befüllt wird, und die Form auf ein Verbindungsmittel aufgedrückt wird, so dass die Versiegelungsmasse durch das Ende des Verbindungsmittels teilweise verdrängt und durch die Löcher der Form auf eine Außenseite der Form gedrückt wird, wobei die Form ein Netz umfasst und einen umlaufenden Steg aufweist, welcher ein weiteres, die Form nach ihrem oberen Ende hin abschlie-βendes Loch umschließt, **dadurch gekennzeichnet, dass** die Versiegelungsmasse eine die Form vollständig einbettende Versiegelung bildet.

11. Verfahren nach Anspruch 10, wobei Kohäsionskräfte der durch die Löcher der Form verdrängten Versiegelungsmasse, derart gewählt sind, dass vereinzelte durch die Löcher der Form austretenden Versiegelungsmassestränge auf der Außenseite der Form ein geschlossenes Volumen bilden, in welches die Form vollkommen eingebettet ist.

## Claims

1. A connection means system (80) for providing an end of a connection means (60) with a seal, the system comprising a seal (82), which includes a cured sealing compound and a mould (51) embedded in the sealing compound, wherein the mould comprises a mesh, and the mould has a plurality of holes (8, 8', 9; 28, 29) and an opening (7; 27), and the mould may be placed via its opening over the end of a connection means (60), and a circumferential rib (4, 26) surrounds a further hole (10, 30) closing off the mould towards the upper end, **characterised in that** the mould is embedded fully in the sealing compound.

2. The connection means system according to claim 1, wherein the sealed end of the connection means is a rivet head, a screw head or a weld seam.

3. The connection means system according to either one of the preceding claims, wherein the mould has a bell form or cap form.

4. The connection means system according to any one of the preceding claims, wherein the mould is produced from a plastics material, preferably a thermoplastic material, or a natural material, preferably made of starch or natural fibres.

5. The connection means system according to any one of the preceding claims, wherein the mould has a hole size which is selected in such a way that the uncured sealing compound remains in the mould under normal pressure.

6. The connection means system according to any one of the preceding claims, wherein spacers are arranged on an inner side of the mould.

7. The connection means system according to any one of the preceding claims, wherein the mould has a rotationally symmetrical form.

8. Use of a sealing aid for sealing a connection means, wherein the sealing aid (50) includes a mould (1; 20; 51) with a plurality of holes (8, 8', 9; 28, 29) and an opening (7; 27), wherein the mould comprises a mesh and a circumferential rib, which surrounds a further hole closing off the mould towards its upper end, such that the mould may be placed via its opening over the end of a connection means (60), and the mould is filled with a liquid or pasty sealing compound (52), wherein the sealing aid is placed via its opening onto the connection means, **characterised in that** sealing compound protruding through the holes in the mould forms a seal embedding the mould completely.

9. The use according to claim 8, wherein the mould, after having been placed on the connection means and once the sealing compound has cured, is fully embedded in the seal.

10. A method for sealing a connection means (60), wherein a mould (1; 20; 51) with a plurality of holes (8, 8', 9; 28, 29) and an opening (7; 27) is filled with a sealing compound (52), and the mould is pressed onto a connection means such that the sealing compound is displaced in part through the end of the connection means and is pressed through the holes in the mould towards an outer side of the mould, wherein the mould comprises a mesh and has a circumferential rib, which surrounds a further hole closing off the mould towards its upper end, **characterised in that** the sealing compound forms a seal embedding the mould fully.

11. The method according to claim 10, wherein cohesive forces of the sealing compound displaced through the holes in the mould are selected in such a way that separate sealing compound strands escaping through the holes in the mould form a closed volume on the outer side of the mould, with the mould being completely embedded in said volume.

## Revendications

1. Système de moyen de raccordement (80) permettant de pourvoir une extrémité d'un moyen de raccordement (60) d'un scellement, comprenant un scellement (82), lequel présente une matière de scellement durcie et un moule (51) intégré dans la matière de scellement, où le moule comprend un filet et le moule possède une multitude de trous (8, 8', 9 ; 28, 29) et un orifice (7 ; 27) et le moule avec l'orifice du moule peut être enfilé par-dessus l'extrémité d'un moyen de raccordement (60) et une nervure (4, 26) circonférentiel entoure un autre trou (10, 30), lequel termine le moule vers l'extrémité supérieure,
**caractérisé en ce que**
le moule est totalement intégré dans la matière de scellement.

2. Système de moyen de raccordement selon la revendication 1, dans lequel l'extrémité scellée du moyen de raccordement est une tête de rivet, une tête de vis ou un cordon de soudure.

3. Système de moyen de raccordement selon l'une des revendications précédentes, dans lequel le moule possède une forme de cloche ou de chapeau.

4. Système de moyen de raccordement selon l'une des revendications précédentes, dans lequel le moule est fabriqué à partir d'une matière plastique, de préférence une matière plastique thermoplastique, ou d'une matière naturelle, de préférence à partir d'amidon ou de fibres naturelles.

5. Système de moyen de raccordement selon l'une des revendications précédentes, dans lequel le moule possède une taille de trou, laquelle est choisie de telle manière que la matière de scellement non durcie reste dans le moule à une pression normale.

6. Système de moyen de raccordement selon l'une des revendications précédentes, dans lequel des espaceurs sont disposés sur une face intérieure du moule.

7. Système de moyen de raccordement selon l'une des revendications précédentes, dans lequel le moule possède une forme symétrique en rotation.

8. Utilisation d'un moyen auxiliaire de scellement pour le scellement d'un moyen de raccordement, dans laquelle le moyen auxiliaire de scellement (50) présente un moule (1 ; 20 ; 51) avec une multitude de trous (8, 8', 9 ; 28, 29) et un orifice (7 ; 27), où le moule comprend un filet ainsi qu'une nervure circonférentiel, laquelle entoure un autre trou terminant le moule vers son extrémité supérieure, de sorte que le moule peut être enfilé avec l'ouverture du moule par-dessus l'extrémité d'un moyen de raccordement (60) et le moule est rempli avec une matière de scellement (52) liquide ou pâteuse , où le moyen auxiliaire de scellement est enfilé sur le moyen de raccordement avec son orifice,
**caractérisé en ce que**
la matière de scellement sortant par les trous du moule forme un scellement intégrant totalement le moule.

9. Utilisation selon la revendication 8, dans laquelle le moule est totalement intégré dans le scellement après le retroussement sur le moyen de raccordement et un durcissement de la matière de scellement.

10. Procédé de scellement d'un moyen de raccordement (60), dans lequel un moule (1 ; 20 ; 51) avec une multitude de trous (8, 8', 9 ; 28, 29) et un orifice (7 ; 27) est rempli avec une matière de scellement (52), et le moule est pressé sur un moyen de raccordement de sorte que la matière de scellement s'échappe partiellement par l'extrémité du moyen de raccordement et est pressée à travers les trous du moule sur un côté extérieur du moule, où le moule comprend un filet et présente une nervure circonférentiel, laquelle entoure un autre trou terminant le moule vers son extrémité supérieure,
**caractérisé en ce que** la matière de scellement forme un scellement intégrant totalement le moule.

11. Procédé selon la revendication 10, dans lequel des forces de cohésion de la matière de scellement repoussée à travers les trous du moule sont choisies de telle manière que des brins de matière de scellement individuels sortant à travers les trous du moule forment un volume fermé dans lequel le moule est totalement intégré.
